(19) Europäisches Patentamt
European Patent Office
Office européen des brevets

(11) **EP 4 749 317 A1**

(12) **EUROPEAN PATENT APPLICATION**

(43) Date of publication:
   **27.05.2026 Bulletin 2026/22**

(21) Application number: **25216298.7**

(22) Date of filing: **17.11.2025**

(51) International Patent Classification (IPC):
   **G01S 5/00** (2006.01)   **G01S 5/02** (2010.01)
   **G08G 5/54** (2025.01)

(52) Cooperative Patent Classification (CPC):
   **G01S 5/011; G01S 5/02521; G01S 5/0258;**
   **G01S 5/02585; G08G 5/26; G08G 5/54**

(84) Designated Contracting States:
   **AL AT BE BG CH CY CZ DE DK EE ES FI FR GB**
   **GR HR HU IE IS IT LI LT LU LV MC ME MK MT NL**
   **NO PL PT RO RS SE SI SK SM TR**
   Designated Extension States:
   **BA**
   Designated Validation States:
   **GE KH LA MA MD TN**

(30) Priority: **20.11.2024 KR 20240165853**
   **07.04.2025 KR 20250044648**
   **05.11.2025 KR 20250165001**

(71) Applicant: **Electronics and Telecommunications**
   **Research Institute**
   **Daejeon 34129 (KR)**

(72) Inventors:
   • **LEE, Jung Ho**
     **34129 Daejeon (KR)**
   • **Youngsu, Cho**
     **34129 Daejeon (KR)**
   • **Juderk, Park**
     **34129 Daejeon (KR)**

(74) Representative: **Betten & Resch**
   **Patent- und Rechtsanwälte PartGmbB**
   **Maximiliansplatz 14**
   **80333 München (DE)**

(54) **ADAPTIVE COMPLEX POSITIONING METHOD AND APPARATUS FOR SUPPORTING SAFE TAKE-OFF AND LANDING OF AIR MOBILITY**

(57)   The present disclosure provides an adaptive complex positioning method and apparatus which may combine measurement information about a wireless communication infrastructure, installed near a take-off and landing point of air mobility, with information obtained from a sensor equipped in air mobility and may thus have high position accuracy in a complicated center of a city also, in order to solve a problem where the position accuracy of a conventional global navigation satellite system (GNSS) is lowered in a complicated center of a city.

FIG. 1

## Description

## BACKGROUND

### Field of the Invention

The present disclosure relates to a positioning method and apparatus of air mobility.

### Discussion of the Related Art

A basic means for a navigation function of air mobility is a global navigation satellite system (GNSS). However, the GNSS may provide high position accuracy in the open terrain, but in a complicated urban environment, a GNSS signal may be unstable due to a high building, a complicated area, and a structure. Particularly, when a vertiport for the take-off and landing of air mobility is disposed in a city, precise landing is needed for safety, but because the GNSS signal is blocked or reflected by a building, the position determination of air mobility may be difficult or may very increase in error. Therefore, because air mobility needs high safety, various sensors and technologies are combined for high position accuracy and availability, and thus, complex positioning technology which provides high precision is needed.

## SUMMARY

The present disclosure provides an adaptive complex positioning method and apparatus for supporting the safe take-off and landing of air mobility.

In detail, in order to solve a problem where the position accuracy of a conventional global navigation satellite system (GNSS) is lowered in a complicated center of a city, the present disclosure provides an adaptive complex positioning method and apparatus which may combine measurement information about a wireless communication infrastructure, installed near a take-off and landing point of air mobility, with information obtained from a sensor equipped in air mobility and may thus have high position accuracy in a complicated center of a city also.

Particularly, in air mobility requiring the stability of an altitude, a plurality of positioning technologies should be complexly used for securing the position accuracy and availability of a high level. In a case which uses adaptive complex positioning technology proposed in the present disclosure, accurate position information may be provided in an urban environment where a multipath phenomenon of a GNSS signal and a radio frequency (RF) signal is serious, and even when there is no positioning database of a wireless communication infrastructure, or an operation of a portion of the wireless communication infrastructure is impossible, position accuracy improved compared to the related art may be provided.

The object of the present disclosure is not limited to the aforesaid, but other objects not described herein will be clearly understood by those skilled in the art from descriptions below.

An adaptive complex positioning method according to an embodiment of the present disclosure may be a positioning method performed by a positioning apparatus equipped in air mobility to support take-off of the mobility from a target vertiport or landing of the mobility at the vertiport.

The positioning method may include: a step of determining whether precise positioning on the mobility is needed, based on vertiport environment information which is information about a positioning environment near the vertiport; a step of, when the precise positioning is needed, determining whether second measurement information for positioning previously collected through wireless communication with a plurality of access points installed in the vertiport is capable of being obtained; a step of, when the second measurement information for positioning is incapable of being obtained, determining a position of the mobility by using a first positioning technique, based on first sensor data collected in at least one of one or more sensors equipped in the mobility, first measurement information for positioning obtained through real-time wireless communication with the plurality of access points, and the second measurement information for positioning; and a step of transferring the position of the mobility to a control device of the mobility and moving the mobility to a target point, based on the position of the mobility.

In an embodiment of the present disclosure, the positioning method may further include a step of, when the precise positioning is not needed, or the second measurement information for positioning is incapable of being obtained, determining the position of the mobility by using a second positioning technique, based on a distance between the mobility and each of the plurality of access points and second sensor data collected in at least one of the one or more sensors.

In an embodiment of the present disclosure, the vertiport environment information may include the number of buildings in a certain radius from the vertiport.

In an embodiment of the present disclosure, the vertiport environment information may include a variance of the number of buildings in a certain radius from the vertiport and a distance measurement value with respect to the plurality of access points. Also, the step of determining whether the precise positioning on the mobility is needed may include: a step of calculating a vertiport environment characteristic value by using the vertiport environment information; a step of comparing the vertiport environment characteristic value with a certain threshold value; and a step of, when the vertiport environment characteristic value is greater than the threshold value, evaluating a multipath phenomenon of a wireless signal to be serious to determine the precise positioning to be needed, in an ambient environment of the vertiport.

In an embodiment of the present disclosure, the first sensor data may include atmospheric pressure data.

In an embodiment of the present disclosure, the second sensor data may include atmospheric pressure data.

In an embodiment of the present disclosure, the first measurement information for positioning may include a received signal strength indicator (RSSI) of a wireless signal transmitted from each of the plurality of access points.

In an embodiment of the present disclosure, the second measurement information for positioning may include a received signal strength indicator (RSSI) of a wireless signal transmitted from each of the plurality of access points and a statistic of the RSSI.

In an embodiment of the present disclosure, the first positioning technique may be a particle filter technique. Also, the step of determining the position of the mobility by using the first positioning technique may include: a step of generating a plurality of particles which are candidate positions of the mobility; a step of calculating a three-dimensional displacement of the mobility, based on the first sensor data; a step of predicting positions of the plurality of particles, based on the three-dimensional displacement; a step of calculating a weight of each of the plurality of particles, based on a comparison result of the first measurement information for positioning and the second measurement information for positioning; and a step of applying the weight to calculate a weighted sum of positions of the plurality of particles and determining the position of the mobility, based on the weighted sum.

In an embodiment of the present disclosure, the second positioning technique may be a trilateration technique. Also, the step of determining the position of the mobility by using the second positioning technique may include: a step of obtaining a distance measurement value through wireless communication with the plurality of access points; a step of calculating a three-dimensional displacement of the mobility, based on the second sensor data; a step of calculating a distance prediction value with respect to one or more access points, where the distance measurement value is not obtained, among the plurality of access points, based on the three-dimensional displacement; and a step of determining the position of the mobility through the trilateration technique, based on the distance measurement value and the distance prediction value.

An adaptive complex positioning apparatus according to an embodiment of the present disclosure may be a positioning apparatus equipped in air mobility to support take-off of the mobility from a target vertiport or landing of the mobility at the vertiport.

The positioning apparatus may include: a communication device configured to wirelessly transmit or receive data to or from a plurality of access points installed in the vertiport; one or more sensors equipped in the mobility; a processor; and a memory configured to store one or more instructions executed through the processor.

The one or more instructions may include: an instruction of determining whether precise positioning on the mobility is needed, based on vertiport environment information which is information about a positioning environment near the vertiport; an instruction of, when the precise positioning is needed, determining whether second measurement information for positioning previously collected through wireless communication with a plurality of access points installed in the vertiport is capable of being obtained; an instruction of, when the second measurement information for positioning is incapable of being obtained, determining a position of the mobility by using a first positioning technique, based on first sensor data collected in at least one of one or more sensors equipped in the mobility, first measurement information for positioning obtained through real-time wireless communication with the plurality of access points, and the second measurement information for positioning; and an instruction of transferring the position of the mobility to a control device of the mobility to enable the mobility to move a target point, based on the position of the mobility.

According to embodiments of the present disclosure, measurement information about a wireless communication infrastructure installed near a take-off and landing point of air mobility may be combined with information obtained from a sensor equipped in the air mobility, thereby securing high position accuracy in a complicated center of a city.

Moreover, according to embodiments of the present disclosure, even when there is no positioning database of a wireless communication infrastructure, or an operation of a portion of the wireless communication infrastructure is impossible, position accuracy improved compared to the related art may be provided.

It is to be understood that both the foregoing general description and the following detailed description of the present invention are exemplary and explanatory and are intended to provide further explanation of the invention as claimed.

## BRIEF DESCRIPTION OF THE DRAWINGS

The accompanying drawings, which are included to provide a further understanding of the disclosure and are incorporated in and constitute a part of this application, illustrate embodiments of the disclosure and together with the description serve to explain the principle of the disclosure.

FIG. 1 is an implementation diagram of an adaptive complex positioning system for supporting safe take-off and landing of air mobility.

FIG. 2 is a block diagram illustrating a functional configuration of a positioning apparatus according to an embodiment of the present disclosure.

FIGs. 3 and 4 are exemplary diagrams of an operation of constructing a database based on data measured while moving air mobility.

FIG. 5 is a flowchart for describing a positioning method of selecting a positioning technique, based on a vertiport environment characteristic value.

FIG. 6 is a block diagram illustrating a physical configuration of a positioning apparatus according to an embodiment of the present disclosure.

FIG. 7 is a flowchart for describing a positioning method according to an embodiment of the present disclosure.

FIGs. 8A and 8B are diagrams for describing a result of correcting a Z-axis coordinate of mobility by using atmospheric pressure data, in an effect of a positioning method according to an embodiment of the present disclosure.

FIGs. 9A and 9B are diagrams for describing a result of correcting an X-axis coordinate and a Y-axis coordinate of mobility by using atmospheric pressure data, in an effect of a positioning method according to an embodiment of the present disclosure.

## DETAILED DESCRIPTION OF THE INVENTION

The present disclosure provides an adaptive complex positioning method and apparatus which may combine, with each other, sensor information about air mobility and a wireless communication infrastructure to estimate an accurate position, for the safe take-off and landing of the air mobility.

The advantages, features and aspects of the present invention will become apparent from the following description of the embodiments with reference to the accompanying drawings, which is set forth hereinafter. The present invention may, however, be embodied in different forms and should not be construed as limited to the embodiments set forth herein. Rather, these embodiments are provided so that this disclosure will be thorough and complete, and will fully convey the scope of the present invention to those skilled in the art. The terms used herein are for the purpose of describing particular embodiments only and are not intended to be limited to example embodiments. As used herein, the singular forms "a," "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. Hereinafter, embodiments of the present invention will be described in detail with reference to the accompanying drawings.

While terms such as "first" and "second," etc., may be used to describe various components, such components must not be understood as being limited to the above terms. It will be understood that when an element is referred to as being "connected to" another element, it can be directly connected to the other element or intervening elements may also be present.

In contrast, when an element is referred to as being "directly connected to" another element, no intervening elements are present. In addition, unless explicitly described to the contrary, the word "comprise" and variations such as "comprises" or "comprising," will be understood to imply the inclusion of stated elements but not the exclusion of any other elements. Also, other expressions describing relationships between components such as "~ between", "immediately ~ between" or "adjacent to ~" and "directly adjacent to ~" may be construed similarly.

In describing embodiments, description on technology which is well known in the technical field of the present invention and is directly irrelevant to the present invention is omitted. This is for more clearly transferring subject matters of the present invention by omitting an unnecessary description in order not to obscure subject matters of the present invention.

Hereinafter, embodiments of the invention will be described in detail with reference to the accompanying drawings. In describing the invention, to facilitate the entire understanding of the invention, like numbers refer to like elements throughout the description of the figures, and a repetitive description on the same element is not provided.

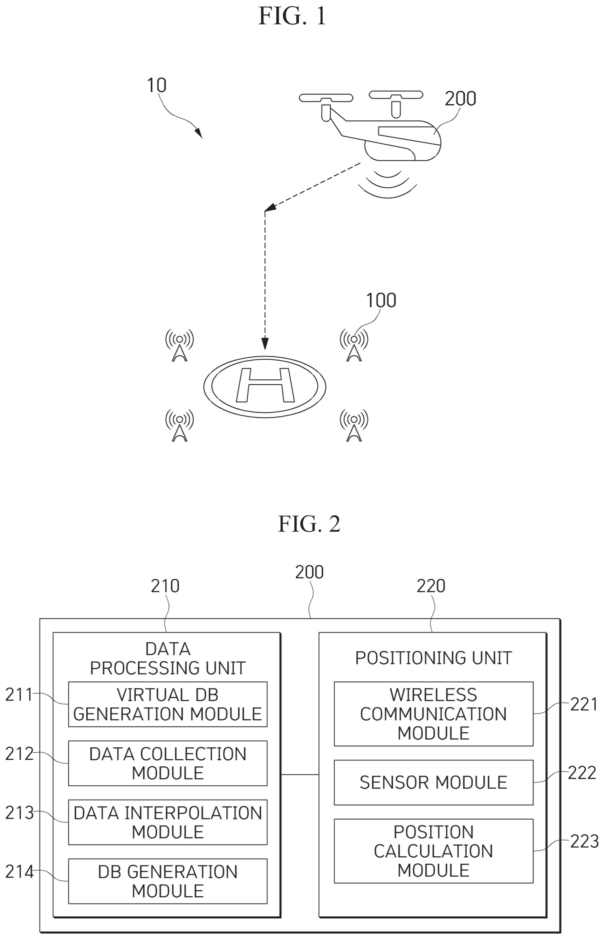

FIG. 1 is an implementation diagram of an adaptive complex positioning system for supporting safe take-off and landing of air mobility. An adaptive complex positioning system (hereinafter referred to as a 'positioning system') 10 according to an embodiment of the present disclosure may include a plurality of wireless access points (hereinafter referred to as an 'AP') 100 and an adaptive complex positioning apparatus (hereinafter referred to as a 'positioning apparatus') 200 equipped in air mobility. The AP 100 may be installed near a vertiport for the take-off and landing of air mobility (hereinafter referred to as 'mobility').

In the embodiment of FIG. 1, the positioning apparatus 200 may estimate a position of mobility by using a wireless signal received from four or more APs 100 installed near a vertiport which is a take-off/landing place of the mobility and sensor data collected by sensors equipped in the mobility.

In embodiments of the present disclosure, the AP 100 may denote a wireless communication infrastructure apparatus which may provide distance information about a distance to the mobility, for wireless communication with the positioning apparatus 200 equipped in the mobility. For example, a communication scheme capable of being adopted to the AP 100 may include wireless fidelity (Wi-Fi), Bluetooth, or ultra-wide band (UWB).

The positioning apparatus 200 may obtain measurement information for positioning through wireless communication with the AP 100.

In embodiments of the present disclosure, the measurement information for positioning may include an identifier of the AP 100 (an identifier of a wireless communication infrastructure apparatus), a distance to the AP 100, received signal strength (strength of a received radio wave), a quality indicator of a wireless signal (for example, a received signal strength indicator (RSSI)), a round trip time (RTT), angle data (for example, an angle with respect to an AP, an angle of arrival (AoA), etc.), and an accumulation value or a statistic of data thereof. Also, in embodiments of the present disclosure, the measurement information for positioning may be included in standard data of each wireless communication infrastructure apparatus and may include all information capable of being received by the positioning apparatus 200.

FIG. 2 is a block diagram illustrating a functional configuration of the positioning apparatus 200 according to an embodiment of the present disclosure. The positioning apparatus 200 may be an apparatus which is equipped in air mobility to collect measurement information for positioning and performs positioning of the air mobility, based on the measurement information for positioning.

As illustrated in FIG. 2, the positioning apparatus 200 according to an embodiment of the present disclosure may include a data processing unit 210 and a positioning unit 220. The data processing unit 210 may include a virtual database (DB) generation module 211, a data collection module 212, a data interpolation module 213, and a DB generation module 214, and the positioning unit 220 may include a wireless communication module 221, a sensor module 222, and a position calculation module 223.

The positioning apparatus 200 may compare all or some of measurement information for positioning (hereinafter referred to as 'second measurement information for positioning') stored in a DB embedded in the positioning apparatus 200 and measurement information for positioning (hereinafter referred to as 'first measurement information for positioning') generated in real time through wireless communication with the AP 100 disposed near a vertiport, thereby calculating a position of the mobility.

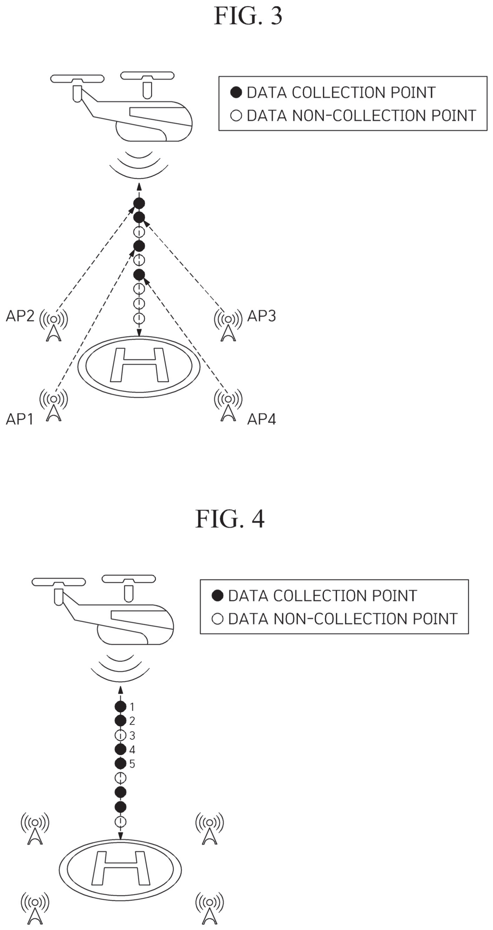

The data processing unit 210 may store the second measurement information for positioning in a database, based on each third-dimensional (3D) position (see FIG. 3) generated with a certain interval with respect to an ambient space of a vertiport (for example, a space for performing the take-off and landing of the mobility and an upper space of the vertiport). In embodiments of the present disclosure, the second measurement information for positioning may be measurement information for positioning which is previously obtained by the positioning apparatus 200 through wireless communication with the AP 100 and is stored in a positioning database.

As described above, the measurement information for positioning may include the identifier of the AP 100 (an identifier of a wireless communication infrastructure apparatus), a distance to the AP 100, received signal strength (strength of a received radio wave), a quality indicator of a wireless signal (for example, an RSSI), an RTT, angle data (for example, an angle with respect to an AP, an AoA, etc.), and an accumulation value or a statistic of data thereof.

As described above, the measurement information for positioning may include data of a specific time (for example, received signal strength, an RSSI, an RTT, and an AoA), and moreover, may include an accumulation value or a statistic of data thereof. For example, an average or a standard deviation of a received signal strength of a wireless signal received from the AP 100 having a specific identifier may be included in the measurement information for positioning.

Generally, a method which directly measures measurement information for positioning while moving mobility for each 3D position may be used for collecting the second measurement information for positioning about the AP 100 for each 3D position designated in an ambient space of a vertiport. In a case which collects the measurement information for positioning, a point (a non-collection point) at which data is not collected may occur due to a fast movement speed of the mobility, and a data non-collection point may be generally removed through several movements so as to minimize the non-collection point. However, there may be a problem where data collection based on the repeated movements of the mobility largely increases a database construction time and cost.

To solve such a problem, the positioning apparatus 200 may use data interpolation. Hereinafter, the positioning apparatus 20 may use data interpolation. Hereinafter, a process of constructing a positioning database (a database storing the second measurement information for positioning) based on interpolated data and data collected by the data processing unit 210 will be described.

FIGs. 3 and 4 are diagrams illustrating database construction.

As described above, the data processing unit 210 of the positioning apparatus 200 of FIG. 2 may include the virtual DB generation module 211, the data collection module 212, the data interpolation module 213, and the DB generation module 214. The virtual DB generation module 211 may predict measurement information for positioning for each 3D position generated with a certain interval near a vertiport. The data collection module 212 may collect real measurement information for positioning. The data interpolation module 213 may perform data interpolation by using the measurement information for positioning which is actually collected. The DB generation module 214 may synthesize real measurement information for positioning and measurement information for positioning generated through data interpolation to generate a positioning database.

The virtual DB generation module 211 may generate a 3D data collection point (hereinafter referred to as a 'data collection point') having different certain intervals with respect to the ambient space of the vertiport. Also, the virtual DB generation module 211 may calculate distance information between the generated data collection point and each AP 100 and may generate and store a virtual distance, angle, and RSSI for each data collection point by using a wireless signal propagation model (for example, a Log-distance model).

The data collection module 212 may store RSSI information about a received signal and a distance to the AP 100 measured through the movement of real mobility, at the data collection point generated by the virtual DB generation module 211. Here, a movement position of real mobility may be measured by using a GNSS, a sensor, and/or wireless communication. For example, the movement of mobility used for collecting measurement information for positioning may be estimated by using the AP 100 installed near the vertiport. Detailed content thereof may be understood in detail with reference to a positioning method based on a trilateration technique described below.

As illustrated in FIG. 3, a point (a data non-collection point) at which data is not collected may occur due to a fast movement speed of mobility. For example, in a case where the wireless communication module 221 is a Wi-Fi round trip time (RTT) module, the degree of congestion of an ambient Wi-Fi network is high, a packet processing speed may be slowed, and when mobility takes off and lands quickly, the data non-collection point may occur due to the processing delay of an RTT module. Accordingly, the data interpolation module 213 may be needed for minimizing an operation of mobility for data collection.

The data interpolation module 213 may interpolate data of a non-collection point by using real measurement information for positioning collected. For example, a data interpolation method available by the data interpolation module 213 may be a method such as piecewise interpolation, polynomial interpolation, spline interpolation, inverse distance weighted (IDW), or Kriging. For example, as in FIG. 4, with reference to a data collection point (points Nos. 1, 2, 4, and 5 of FIG. 4), measurement information for positioning on a non-collection point (point No. 3 of FIG. 4) may be interpolated by using IDW. A value of the point No. 3 of FIG. 4 may be calculated by using the following Equation 1.

$$[Equation\ 1]$$

$$u_3 = \frac{\sum_{i=1}^{5} w_i \cdot u_i}{\sum_{i=1}^{5} w_i}$$

Here, $u_i$ may denote a value of an $i^{th}$ point, and $w_i$ may denote a weight of the $i^{th}$ point. The weight of the $i^{th}$ point may be calculated as an inverse number of a distance between points as in the following Equation 2.

$$[Equation\ 2]$$

$$w_i = \frac{1}{d(x, x_i)^p}$$

In Equation 2, $d(x, x_i)$ may denote a distance between a data non-collection point x and a data collection point $x_i$ (a point at which there is measurement data), and p may denote a parameter which adjusts a weight $w_i$. For example, p may be 2.

When interpolation on all data non-collection points is completed by the data interpolation module 213, the DB generation module 214 may store, in a positioning database, the second measurement information for positioning (including all of measured measurement information for positioning and interpolated measurement information for positioning) about all data collection points.

In the positioning apparatus 200, the positioning unit 220 may perform a function of obtaining measurement information for positioning in real time. The positioning unit 220 may also be used when collecting the second measurement information for positioning stored in the positioning database, in addition to the first measurement information for positioning needed for landing of real mobility.

As described above, the positioning unit 220 may include a wireless communication module 221, a sensor module 222, and a position calculation module 223.

The wireless communication module 221 may perform wireless communication with the AP 100 installed near the vertiport. For example, the wireless communication module 221 may be a communication device which may perform communication through at least one scheme among wireless LAN (WLAN), Bluetooth, HDR WPAN, UWB, ZigBee, Impulse Radio, 60GHz WPAN, Binary-CDMA, Wireless USB technology and wireless HDMI technology, 5th generation communication (5G), long term evolution-advanced (LTE-A), long term evolution (LTE), and Wi-Fi. The wireless communication module 221 may obtain measurement information for positioning (for example, a distance, received signal strength, an RSSI, etc.) through wireless communication with the AP 100 near the vertiport.

The sensor module 222 may include various sensors which may calculate a 3D movement displacement of mobility. For example, the sensor module 222 may include an acceleration sensor, a gyro sensor, a geomagnetic sensor, and/or an atmospheric pressure sensor.

The position calculation module 223 may calculate a real-time position of mobility. The position calculation module 223 may determine a position of mobility by using measurement information for positioning obtained by the wireless communication module 221 and sensor data obtained by the sensor module 222.

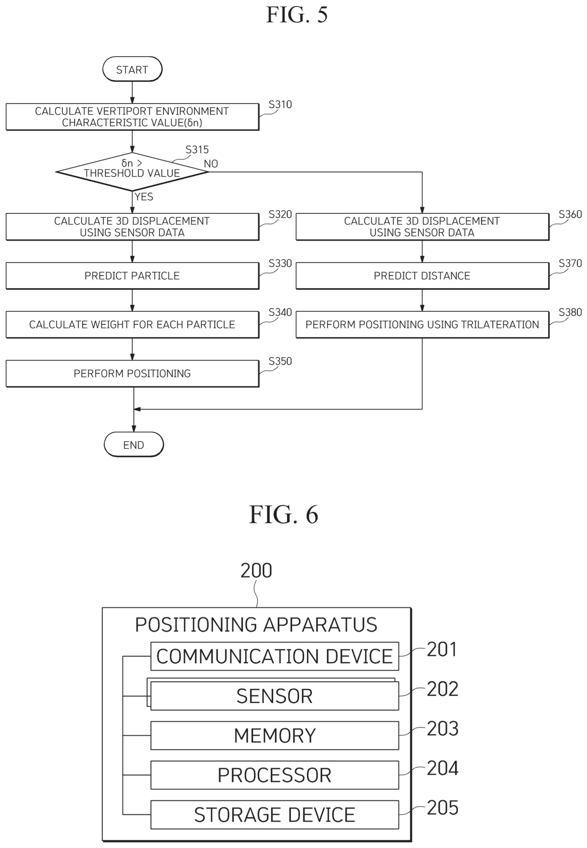

The position calculation module 223 may calculate a position by using the trilateration technique or a particle filter technique, based on a positioning environment of a vertiport area. In a take-off and landing process of mobility requiring high stability, positioning technology should position accuracy and availability. However, it may be unable to guarantee high position accuracy and availability with only one positioning technology. For example, in an environment where buildings are concentrated near a vertiport, a signal of the AP 100 may be affected by a multipath formed by a building. The multipath may largely affect an accuracy of distance information used in the trilateration technique, and thus, in such an environment, the positioning performance of the particle filter technique may be more accurate. Therefore, as in FIG. 5, the position calculation module 223 may adaptively select the trilateration technique or the particle filter technique to calculate a position of mobility, based on an environment variable of the vertiport area.

FIG. 5 is a flowchart for describing a positioning method of selecting a positioning technique, based on a vertiport environment characteristic value. The positioning method may include a process (S310 and S315) of calculating a vertiport environment characteristic value and comparing the vertiport environment characteristic value with a threshold value, a process (S320 to S350) of calculating a position of mobility by using the particle filter technique, and a process (S360 to S380) of calculating the position of the mobility by using the trilateration technique.

Step S310 may be a step of calculating the vertiport environment characteristic value.

The position calculation module 223 may collect vertiport environment information through the wireless communication module 221 or the sensor module 222 and may calculate the vertiport environment characteristic value, based on vertiport environment information. For example, the vertiport environment information may include a distance measurement value of each AP disposed in a vertiport, the kinds and number of obstacles (a building, a structure, tree, a pillar, a power line, etc.) near the vertiport (a radius may be set), a position and a height of each obstacle, a direction and strength of wind over time, the possibility of occurrence of turbulence, ambient geographic information, a base station, Ladar, and radio frequency equipment near the vertiport (information for determining the possibility of radio wave interference, global positioning system (GPS) signal quality, electromagnetic noise, and a visibility condition (an illumination environment such as illuminance per one hour), and moreover, may be process information based on the information.

The vertiport environment characteristic value may be a numerical value of the vertiport environment information, and when the vertiport environment characteristic value is high, the position calculation module 223 may determine that precise positioning is needed. When many buildings are near the vertiport, a GNSS signal may be blocked or reflected by a building, and due to this, it may be difficult to perform positioning of mobility, and an error may considerably increase. When the GNSS signal is blocked by a building, the number of satellites capable of reception may decrease, and when a GNSS reflection signal is generated by a building, a horizontal dilution of Precision (HDOP) may increase, and the possibility of receiving a non-line-of sight (NLOS) signal may increase.

In a case where the level of difficulty of positioning increases due to an ambient environment of a vertiport, precise positioning should be performed through a complex positioning method where various sensors and technologies are combined. Accordingly, the positioning apparatus 200 according to an embodiment of the present disclosure may calculate a vertiport environment characteristic value to determine whether precise positioning is needed, based on vertiport environment information.

For example, the vertiport environment characteristic value may be calculated based on a feature value such as a variance value of a distance measurement value and the number of ambient buildings as in the following Equation 3.

$$[\text{Equation 3}]$$
$$\delta_n = \frac{\beta_n + v_n}{100}$$

Here, $\delta_n$ may denote a value representing a characteristic of an ambient environment of an $n$th vertiport (hereinafter referred to as a 'vertiport environment characteristic value'), and may denote the number of buildings near the $n$th vertiport (a certain radius may be set). Also, $v_n$ may denote a variance of a distance measurement value of each AP 100 installed near the $n$th vertiport. As an example, when four Aps 100 are near a vertiport, an average of a distance measurement value variance value of each AP 100 may be determined to be $v_n$.

Step S315 may be a step of determining whether the vertiport environment characteristic value is greater than a predetermined threshold value.

When $\delta_n$ is greater than the threshold value, a multipath phenomenon of a wireless signal may be determined to be a severe environment, and in steps S320 to S350, the position calculation module 223 may select the particle filter technique to perform positioning of mobility, for precise positioning.

When $\delta_n$ is less than or equal to the threshold value, the multipath phenomenon of the wireless signal may be determined to be a non-severe environment, and in steps S360 to S380, the position calculation module 223 may select the trilateration technique to perform positioning of the mobility.

Hereinafter, a positioning process (S320 to S350) based on the particle filter technique will be described.

The position calculation module 223 may calculate a 3D displacement of the mobility by using sensor data collected in a sensor (for example, an acceleration sensor, a gyro sensor, a geomagnetic sensor, and an atmospheric pressure sensor) included in the sensor module 222 in step S320 and may predict a position of a particle (denoting a candidate position of the mobility) by using the calculated 3D displacement in step S330.

For example, the position calculation module 223 may apply an integral to an acceleration value collected by an acceleration sensor to obtain a horizontal (X axis and Y axis) displacement of the mobility. Also, the position calculation module 223 may convert an atmospheric pressure difference on a certain time into a distance to obtain a vertical (Z axis) displacement of the mobility.

Moreover, the position calculation module 223 may calculate a weight for each particle by using received radio wave strength, a quality indicator (RSSI), and an angle and a distance with respect to the AP 100 near the vertiport, which are obtained through the wireless communication module 221 and may generate a new particle in step S340. Here, a position of the generated particle may be a data collection point which is to be applied to a positioning database. Also, a positioning database corresponding to a vertiport at a take-off and landing point may be selected based on a coordinate value of a GNSS before take-off and landing.

Subsequently, in step S350, the position calculation module 223 may calculate a position of the mobility, based on a weighted sum of particle positions to which a per-particle weight is applied. The collection of measurement information for positioning through the wireless communication module 221 may not occur while a displacement of the mobility occurs by units of certain time. In this case, the position calculation module 223 may drive the data interpolation module 213 to interpolate measurement information for positioning on a non-collection point and may use the interpolated measurement information in real-time positioning.

Hereinafter, a positioning process (S360 to S380) based on the trilateration technique will be described.

General trilateration positioning technology may use only a distance measurement value, but in an embodiment of the present disclosure, a position of the mobility may be calculated by using a distance measurement value between the AP 100 and the wireless communication module 221 and distance information estimated based on 3D displacement information about the mobility calculated based on sensor data.

According to general wireless communication technology, a certain time or more may be consumed in calculating distance information between a wireless communication device and each AP. Therefore, as in FIG. 3, it may be unable to simultaneously secure at least three or more pieces of distance information needed for calculating a position of the mobility. Accordingly, inaccurate distance information (at least two) may be used when calculating a position of mobility having a fast movement speed, and thus, there may be a problem where accurate position calculation is impossible.

In embodiments of the present disclosure, in order to solve such a problem, distance information may be predicted by units of certain interval by using displacement information based on sensor data. That is, the position calculation module 223 may calculate a 3D displacement of the mobility by using sensor data collected in the sensor module 222 in step S360 and may predict a distance between the mobility and each AP by using the calculated 3D displacement in step S370.

For example, when performing vertical take-off and landing of mobility, the position calculation module 223 may substitute sensor data (an atmospheric pressure value) of an atmospheric pressure sensor into the following Equation 4 to calculate a vertical (Z axis) displacement.

$$[\text{Equation 4}]$$
$$\Delta h = b \cdot \left(1 - \left(\frac{P_t}{P_{t-1}}\right)^a\right)$$

In Equation 4, $\Delta h$ may denote the vertical (Z axis) displacement of the mobility, a may denote a conversion constant, and b may denote a conversion constant. Also, $P_t$ may denote an atmospheric pressure value at a time t.

Moreover, as in the following Equation 5, the position calculation module 223 may predict a distance between the mobility and each AP by using the vertical (Z axis) displacement.

$$[\text{Equation 5}]$$
$$r_t = \sqrt{r_{t-1}^2 - \Delta h^2 - 2 \cdot \Delta h \cdot (h_{t-1} - \Delta h)}$$

In Equation 5, $r_t$ may denote a distance between the mobility and each AP at the time t, and $h_{t-1}$ may denote a latitude of the mobility at a time t-1.

In another embodiment, a 3D displacement of the mobility may be calculated by using an acceleration sensor and an atmospheric pressure sensor, and by similarly using Equation 5, distance information between the mobility and each AP may be calculated.

Moreover, the position calculation module 223 may calculate a position of the mobility by using distance information between the mobility and a specific AP measured at the time t and at least three or more pieces of predicted distance information in step S380. Accordingly, a problem of positioning based on the trilateration technique may be solved, and accurate position information may be generated and provided.

FIG. 6 is a block diagram illustrating a physical configuration of the positioning apparatus 200 according to an embodiment of the present disclosure.

As illustrated in FIG. 6, the positioning apparatus 200 may be implemented in the form of computer system including a sensor. The positioning apparatus 200 may be equipped in air mobility such as drones or urban air mobility (UAM) and may perform positioning of corresponding mobility.

As illustrated in FIG. 6, the positioning apparatus 200 may include a communication device 210 for transmitting or receiving data through a wireless communication scheme, one or more sensors 202, a memory 203, at least one processor 204, and a storage device 205. The sensor 202 may include one of a camera, an acceleration sensor, a gyro sensor, a geomagnetic sensor, an inertial measurement unit (IMU), and an atmospheric pressure sensor, or a combination thereof. However, the sensor 202 is not limited to the embodiment described above. The processor 204 may be a central processing unit (CPU), or may be a semiconductor device which executes a computer-readable instruction stored in the memory 203 or the storage device 205. The memory 203 and the storage device 205 may include volatile or non-volatile storage mediums of various types. For example, the memory 203 may include read only memory (ROM) and random access memory (RAM). In embodiments of the present disclosure, the memory 203 may be disposed in or outside the processor 204, and the memory 203 may be connected to the processor 204 through various means known to those skilled in the art. The memory 203 may be volatile or non-volatile storage mediums of various types, and for example, the memory 203 may include ROM or RAM.

The positioning apparatus 200 illustrated in FIG. 6 may be an embodiment, and the elements of the positioning apparatus 200 according to embodiments of the present disclosure are not limited to the embodiment of FIG. 6, and depending on the case, an element may be added, changed, or deleted.

Therefore, an embodiment of the present disclosure may be implemented as a method implemented in a computer, or may be implemented as a non-transitory computer-readable medium storing an instruction executable by a computer. In an embodiment of the present disclosure, when executed by the processor 204, computer-readable instructions may perform the method according to at least one aspect of the present disclosure.

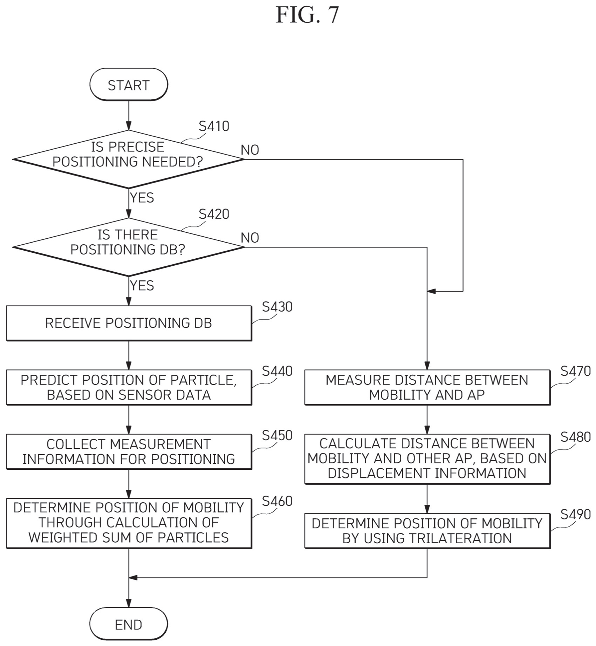

FIG. 7 is a flowchart for describing an adaptive complex positioning method (hereinafter referred to as a 'positioning method') for supporting safe take-off and landing of air mobility, according to an embodiment of the present disclosure. The positioning method of FIG. 7 may be performed by the positioning apparatus 200 of FIG. 6.

Referring to FIG. 7, the positioning method according to an embodiment of the present disclosure may include steps S410 to S490. The positioning method illustrated in FIG. 7 may be an embodiment, and the steps of the positioning method according to embodiments of the present disclosure are not limited to the embodiment of FIG. 7, and depending on the case, a step may be added, changed, or deleted.

For convenience of description, the positioning method according to an embodiment of the present disclosure may be assumed to be performed by the positioning apparatus 200. As described above, the positioning apparatus 200 may be equipped in mobility and may measure a position of the mobility.

Step S410 may be a step of determining whether precise positioning is needed.

First, the positioning apparatus 200 may determine whether precise positioning is needed. The positioning apparatus 200 may determine whether precise positioning is needed, based on vertiport environment information. The vertiport environment information may be information about a vertiport for the take-off and landing of the mobility. For example, the vertiport environment information may include a distance measurement value of each AP disposed in the vertiport, the kinds and number of obstacles (a building, a structure, tree, a pillar, a power line, etc.) near the vertiport (a radius may be set), a position and a height of each obstacle, a direction and strength of wind over time, the possibility of occurrence of turbulence, ambient geographic information, a base station, Ladar, and radio frequency equipment near the vertiport (information for determining the possibility of radio wave interference, GPS signal quality, electromagnetic noise, and a visibility condition (an illumination environment such as illuminance per one hour), and moreover, may be process information based on the information.

The positioning apparatus 200 may collect the vertiport environment information by using the sensor 202, or may collect the vertiport environment information through the communication device 201 from the AP 100 or a control system 30 (not shown) at a take-off and landing point. For example, the positioning apparatus 200 may process image information collected from an electro-optical (EO)/infrared (IR) camera included in the sensor 202 to obtain the vertiport environment information.

The processor 204 of the positioning apparatus 200 may determine whether precise positioning is needed, based on the vertiport environment information.

The processor 204 may calculate a vertiport environment characteristic value, based on the vertiport environment information, and when the vertiport environment characteristic value is greater than a certain threshold value, the processor 204 may determine whether precise positioning is needed. For example, the processor 204 may determine the degree of concentration of buildings (for example, the number of buildings per area in a predetermined near-vertiport area) near the vertiport, and when the determined degree of concentration is greater than or equal to a certain threshold value, the processor 204 may determine that precise positioning is needed.

As another example, as in Equation 3, the processor 204 may calculate the vertiport environment characteristic value, based on a variance value of a distance measurement value and the number of near-vertiport buildings, and may compare the vertiport environment characteristic value with the threshold value to determine whether precise positioning is needed.

As another example, the control system 30 may transfer an instruction, representing that precise positioning is needed, to the positioning apparatus 200.

When precise positioning is needed, the positioning apparatus 200 may perform step S420, and otherwise, may perform step S470.

For reference, step S410 may be initiated under a specific condition. The positioning apparatus 200 may determine whether to initiate step S410, based on a latitude or a flight speed (a speed in a Z-axis direction) of the mobility. For example, when landing, in a case where sensor data corresponding to a hovering condition of the mobility is collected in the sensor 202 (the flight speed is less than a reference value and/or the latitude is less than a certain latitude), the processor 204 may determine that a time for determining whether precise positioning for landing is needed arrives.

Step S420 may be a step of determining whether there is a positioning database.

Because it is determined that precise positioning is needed, the positioning apparatus 200 may determine whether a positioning database is included in the control system 30 or the positioning apparatus 200. The positioning database may be a database which stores measurement information for positioning about an ambient space of the vertiport which is a take-off and landing point of the mobility. For example, the positioning database may store one of an angle and a distance with respect to the AP 100 installed near the vertiport, a position, received signal strength (radio wave strength), and a quality indicator (RSSI) of the AP 100, and an accumulation value or a statistic of the data, or a combination thereof. The positioning database may include known fingerprinting information for positioning, in addition to the example described above.

The positioning apparatus 200 may autonomously determine whether the positioning database is included in the storage device 205, or whether the positioning database is included in the control system 30, based on the communication device 201. When there is the positioning database, the positioning apparatus 200 may perform step S430, and otherwise, may perform step S470.

Steps S430 to S460 described below may be steps which are performed when there is the positioning database.

Step S430 may be a step of receiving the positioning database.

The positioning apparatus 200 may extract measurement information for positioning in the positioning database of the storage device 205, or may receive the positioning database from the control system 30 through the communication device 201. For example, when the positioning database is received from the control system 30, the processor 204 may store the positioning database in the memory 203 or the storage device 205.

Step S440 may be a step of calculating a position of a particle, based on the sensor data.

The processor 204 may generate a plurality of particles which are candidate positions of the mobility. Also, the processor 204 may calculate a 3D displacement of the mobility, based on the sensor data collected in the sensor 202, and may predict (or estimate) positions of the plurality of particles, based on the 3D displacement.

Step S450 may be a step of collecting measurement information for positioning.

The communication device 201 may collect the measurement information for positioning (first measurement information for positioning) through wireless communication with the AP 100. For example, the communication device 201 may measure an RSSI and a distance between the mobility and each AP 100 through wireless communication with a plurality of APs 100 installed in the vertiport.

Step S460 may be a step of determining a position of the mobility through the calculation of a particle weighted sum.

The processor 204 may compare the first measurement information for positioning with the second measurement information for positioning stored in the positioning database to calculate a weight corresponding to each particle. That is, the processor 204 may compare the second measurement information for positioning, corresponding to the position of each particle, with the first measurement information for positioning actually measured through wireless communication and may determine a weight of each particle with respect to a similarity therebetween. Also, the processor 204 may calculate a weighted sum of the positions of the particles to determine the weighted sum as a position of the mobility and may generate a new particle in a region of a high-weight particle. That is, the processor 204 may determine a weighted sum of particle positions as the position of the mobility.

Steps S440 to S460 may be repeated while the mobility is moving.

Steps S470 to S490 may be steps which are performed when there is no positioning database.

Step S470 may be a step of measuring a distance between the mobility and the AP 100.

As described above, step S470 may be performed when it is determined that precise positioning is not needed in step S410, or may be performed when it is determined that there is no positioning database needed for precise positioning in step S420.

The communication device 201 may measure a distance between the plurality of APs 100 through communication with the AP 100 at a plurality of times. The communication device 201 may transfer a distance measurement value of each AP 100 to the processor 204.

Step S480 may be a step of calculating a distance between the mobility and another AP 100, based on displacement information.

The processor 204 may calculate the displacement information (3D displacement) about the mobility, based on the sensor data collected in the sensor 202. The processor 204 may predict a distance between the mobility and the AP 100 where a distance measurement value is not obtained in step S470, based on the displacement information. Accordingly, distance data between each AP 100 and the mobility may be secured with respect to the same time. That is, the distance data may include a measurement value and a prediction value.

Step S490 may be a step of determining the position of the mobility by using the trilateration technique.

The processor 204 may determine the position of the mobility by using the trilateration technique, based on the distance measurement value with respect to each AP 100.

When steps S460 to S490 end, the positioning apparatus 200 may transfer the position of the mobility to a control device (a mobility controller) equipped in the mobility, and the mobility controller may move the mobility so that the mobility takes off from the vertiport or lands at the vertiport, based on the position of the mobility determined by the positioning apparatus 200.

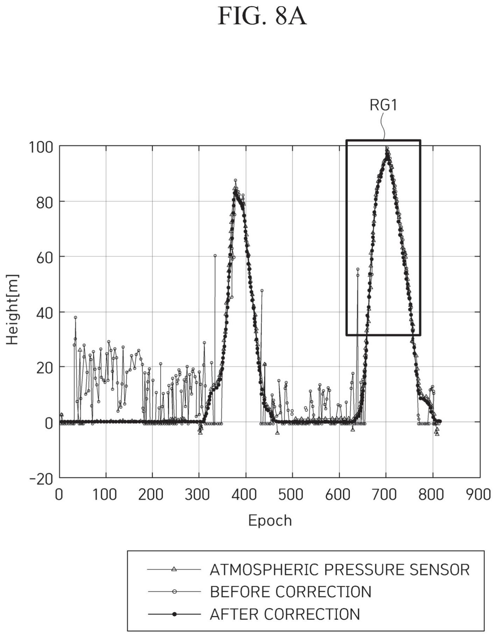

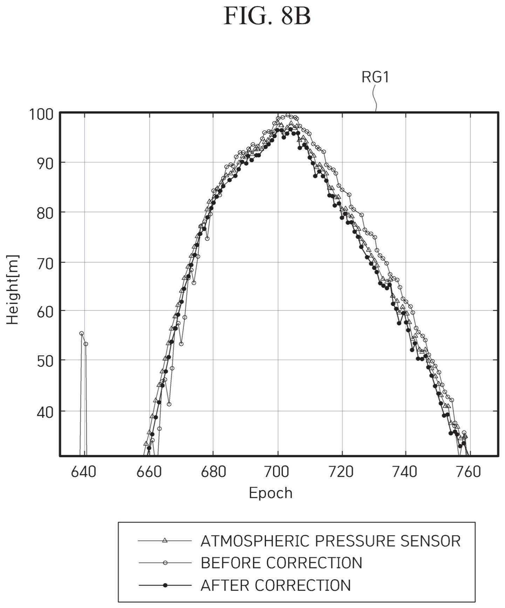

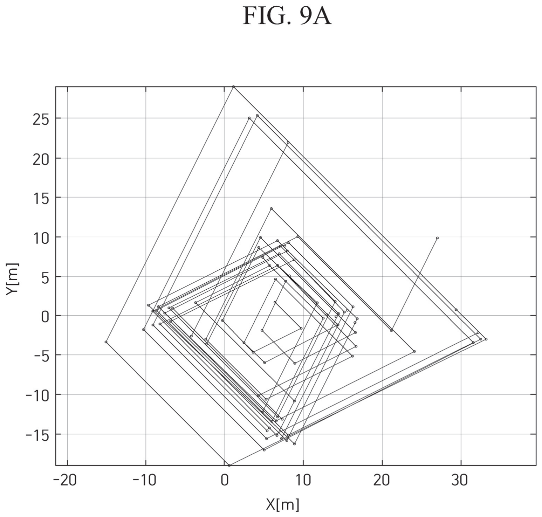

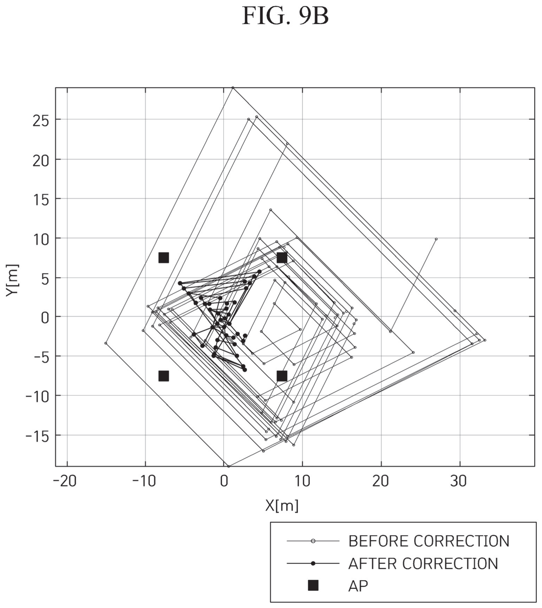

FIGs. 8A to 9B are diagrams for describing an effect of a positioning method according to an embodiment of the present disclosure. FIGs. 8A and 8B are diagrams for describing a result of correcting a Z-axis coordinate of mobility by using atmospheric pressure data measured by an atmospheric pressure sensor, and FIGs. 9A and 9B are diagrams for describing a result of correcting an X-axis coordinate and a Y-axis coordinate of the mobility by using the atmospheric pressure data measured by the atmospheric pressure sensor.

Such a result may be measured by using a Wi-Fi RTT module while taking off and landing air mobility, in a state where four APs are installed near a vertiport and may be a result of comparison performed before and after correcting position data of the mobility by using an atmospheric pressure sensor.

When the Wi-Fi RTT module is equipped in the communication device 201 of the positioning apparatus 200, a positioning result may unstably appear due to the processing delay of the RTT module before correcting with atmospheric pressure data. FIG. 8B is an enlarged view of an RG1 portion (30 m to 100 m) in FIG. 8A, and it may be seen that a positioning result before correction shows a stair phenomenon. Also, referring to FIG. 9A, due to the delay of the Wi-Fi RTT module, an X coordinate and a Y coordinate of the mobility may be unstable, and a distribution may be large, but as a result of correction based on atmospheric pressure data, as in FIG. 9B, it may be seen that a position of the mobility is stably measured within a range of four APs.

The positioning method described above has been described with reference to the flowchart illustrated in the drawing. To provide a simple description, the method is illustrated as a series of blocks and has been described, but the present disclosure is not limited to the order of the blocks, and some blocks and the other blocks may be executed simultaneously or in order which differs from the illustration and description of the present disclosure, and various other branches and flow paths and the orders of blocks for accomplishing the same or similar results may be implemented. Also, all blocks illustrated for implementing the method described in the present disclosure may not be needed.

In the above description of FIG. 7, based on an implementation example of the present disclosure, each step may be further divided into additional steps, or may be combined into fewer steps. Also, depending on the case, some steps may be omitted, and the order of steps may be changed. Despite other omitted descriptions, the descriptions of FIGs. 1 to 6 may be applied to the description of FIG. 7. Also, the description of FIG. 7 may be applied to the descriptions of FIGs. 1 to 6. Also, the descriptions of FIGs. 1 to 5 may be applied to the description of FIG. 6.

According to embodiments of the present disclosure, measurement information about a wireless communication infrastructure installed near a take-off and landing point of air mobility may be combined with information obtained from a sensor equipped in the air mobility, thereby securing high position accuracy in a complicated center of a city.

Moreover, according to embodiments of the present disclosure, even when there is no positioning database of a wireless communication infrastructure, or an operation of a portion of the wireless communication infrastructure is impossible, position accuracy improved compared to the related art may be provided.

It will be apparent to those skilled in the art that various modifications and variations can be made in the present invention without departing from the spirit or scope of the inventions. Thus, it is intended that the present invention covers the modifications and variations of this invention provided they come within the scope of the appended claims and their equivalents.

**Claims**

1. A positioning method performed by a positioning apparatus equipped in air mobility to support take-off of the mobility from a target vertiport or landing of the mobility at the vertiport, the positioning method comprising:

   a step of determining whether precise positioning on the mobility is needed, based on vertiport environment information which is information about a positioning environment near the vertiport;

a step of, when the precise positioning is needed, determining whether second measurement information for positioning previously collected through wireless communication with a plurality of access points installed in the vertiport is capable of being obtained;

a step of, when the second measurement information for positioning is capable of being obtained, determining a position of the mobility by using a first positioning technique, based on first sensor data collected in at least one of one or more sensors equipped in the mobility, first measurement information for positioning obtained through real-time wireless communication with the plurality of access points, and the second measurement information for positioning; and

a step of transferring the position of the mobility to a control device of the mobility and moving the mobility to a target point, based on the position of the mobility.

2. The positioning method of claim 1, further comprising a step of, when the precise positioning is not needed, or the second measurement information for positioning is incapable of being obtained, determining the position of the mobility by using a second positioning technique, based on a distance between the mobility and each of the plurality of access points and second sensor data collected in at least one of the one or more sensors.

3. The positioning method of claim 1 or 2, wherein the vertiport environment information comprises the number of buildings in a certain radius from the vertiport.

4. The positioning method of one of claims 1 to 3, wherein the vertiport environment information comprises a variance of the number of buildings in a certain radius from the vertiport and a distance measurement value with respect to the plurality of access points, and

the step of determining whether the precise positioning on the mobility is needed comprises:

a step of calculating a vertiport environment characteristic value by using the vertiport environment information;

a step of comparing the vertiport environment characteristic value with a certain threshold value; and

a step of, when the vertiport environment characteristic value is greater than the threshold value, evaluating a multipath phenomenon of a wireless signal to be serious to determine the precise positioning to be needed, in an ambient environment of the vertiport.

5. The positioning method of one of claims 1 to 4, wherein the first sensor data comprises atmospheric pressure data.

6. The positioning method of one of claims 2 to 5, wherein the second sensor data comprises atmospheric pressure data.

7. The positioning method of one of claims 1 to 6, wherein the first measurement information for positioning comprises a received signal strength indicator (RSSI) of a wireless signal transmitted from each of the plurality of access points.

8. The positioning method of one of claims 1 to 7, wherein the second measurement information for positioning comprises a received signal strength indicator (RSSI) of a wireless signal transmitted from each of the plurality of access points and a statistic of the RSSI.

9. The positioning method of one of claims 1 to 8, wherein the first positioning technique is a particle filter technique, and

the step of determining the position of the mobility by using the first positioning technique comprises:

a step of generating a plurality of particles which are candidate positions of the mobility;

a step of calculating a three-dimensional displacement of the mobility, based on the first sensor data;

a step of predicting positions of the plurality of particles, based on the three-dimensional displacement;

a step of calculating a weight of each of the plurality of particles, based on a comparison result of the first measurement information for positioning and the second measurement information for positioning; and

a step of applying the weight to calculate a weighted sum of positions of the plurality of particles and determining the position of the mobility, based on the weighted sum.

10. The positioning method of one of claims 2 to 9, wherein the second positioning technique is a trilateration technique, and

the step of determining the position of the mobility by using the second positioning technique comprises:

a step of obtaining a distance measurement value through wireless communication with the plurality of access points;

a step of calculating a three-dimensional displacement of the mobility, based on the second sensor data;

a step of calculating a distance prediction value with respect to one or more access points, where the distance measurement value is not obtained, among the plurality of access points, based on the three-dimensional displacement; and

a step of determining the position of the mobility through the trilateration technique, based on the distance measurement value and the distance prediction value.

11. A positioning apparatus equipped in air mobility to support take-off of the mobility from a target vertiport or landing of the mobility at the vertiport, the positioning apparatus comprising:

a communication device configured to wirelessly transmit or receive data to or from a plurality of access points installed in the vertiport;
one or more sensors equipped in the mobility;
a processor; and
a memory configured to store one or more instructions executed through the processor,
wherein the one or more instructions comprise:

an instruction of determining whether precise positioning on the mobility is needed, based on vertiport environment information which is information about a positioning environment near the vertiport;
an instruction of, when the precise positioning is needed, determining whether second measurement information for positioning previously collected through wireless communication with a plurality of access points installed in the vertiport is capable of being obtained;
an instruction of, when the second measurement information for positioning is capable of being obtained, determining a position of the mobility by using a first positioning technique, based on first sensor data collected in at least one of one or more sensors equipped in the mobility, first measurement information for positioning obtained through real-time wireless communication with the plurality of access points, and the second measurement information for positioning; and
an instruction of transferring the position of the mobility to a control device of the mobility to control the mobility to move to a target point, based on the position of the mobility.

12. The positioning apparatus of claim 11, wherein the one or more instructions further comprise an instruction of, when the precise positioning is not needed, or the second measurement information for positioning is incapable of being obtained, determining the position of the mobility by using a second positioning technique, based on a distance between the mobility and each of the plurality of access points and second sensor data collected in at least one of the one or more sensors.

13. The positioning apparatus of claim 11 or 12, wherein the vertiport environment information comprises the number of buildings in a certain radius from the vertiport.

14. The positioning apparatus of one of claims 11 to 13, wherein the vertiport environment information comprises a variance of the number of buildings in a certain radius from the vertiport and a distance measurement value with respect to the plurality of access points, and
the instruction of determining whether the precise positioning on the mobility is needed comprises:

an instruction of calculating a vertiport environment characteristic value by using the vertiport environment information;
an instruction of comparing the vertiport environment characteristic value with a certain threshold value; and
an instruction of, when the vertiport environment characteristic value is greater than the threshold value, evaluating a multipath phenomenon of a wireless signal to be serious to determine the precise positioning to be needed, in an ambient environment of the vertiport.

15. The positioning apparatus of one of claims 12 to 14, wherein the second positioning technique is a trilateration technique, and
the instruction of determining the position of the mobility by using the second positioning technique comprises:

an instruction of obtaining a distance measurement value through wireless communication with the plurality of access points;
an instruction of calculating a three-dimensional displacement of the mobility, based on the second sensor data;
an instruction of calculating a distance prediction value with respect to one or more access points, where the distance measurement value is not obtained, among the plurality of access points, based on the three-dimensional displacement; and
an instruction of determining the position of the mobility through the trilateration technique,

**EP 4 749 317 A1**

based on the distance measurement value and the distance prediction value.

## FIG. 1

## FIG. 2

EP 4 749 317 A1

## FIG. 3

● DATA COLLECTION POINT
○ DATA NON-COLLECTION POINT

AP2  AP3  AP1  AP4

## FIG. 4

● DATA COLLECTION POINT
○ DATA NON-COLLECTION POINT

16

## FIG. 5

START

CALCULATE VERTIPORT ENVIRONMENT CHARACTERISTIC VALUE($\delta n$) — S310

$\delta n >$ THRESHOLD VALUE — S315

NO

YES

CALCULATE 3D DISPLACEMENT USING SENSOR DATA — S320

CALCULATE 3D DISPLACEMENT USING SENSOR DATA — S360

PREDICT PARTICLE — S330

PREDICT DISTANCE — S370

CALCULATE WEIGHT FOR EACH PARTICLE — S340

PERFORM POSITIONING USING TRILATERATION — S380

PERFORM POSITIONING — S350

END

## FIG. 6

200

POSITIONING APPARATUS

COMMUNICATION DEVICE — 201

SENSOR — 202

MEMORY — 203

PROCESSOR — 204

STORAGE DEVICE — 205

## FIG. 7

START

S410 — IS PRECISE POSITIONING NEEDED?
NO →
YES ↓

S420 — IS THERE POSITIONING DB?
NO →
YES ↓

S430 — RECEIVE POSITIONING DB

S440 — PREDICT POSITION OF PARTICLE, BASED ON SENSOR DATA

S470 — MEASURE DISTANCE BETWEEN MOBILITY AND AP

S450 — COLLECT MEASUREMENT INFORMATION FOR POSITIONING

S480 — CALCULATE DISTANCE BETWEEN MOBILITY AND OTHER AP, BASED ON DISPLACEMENT INFORMATION

S460 — DETERMINE POSITION OF MOBILITY THROUGH CALCULATION OF WEIGHTED SUM OF PARTICLES

S490 — DETERMINE POSITION OF MOBILITY BY USING TRILATERATION

END

# FIG. 8A

FIG. 8B

RG1

FIG. 9A

# FIG. 9B

Europäisches
Patentamt
European
Patent Office
Office européen
des brevets

# EUROPEAN SEARCH REPORT

**Application Number**

EP 25 21 6298

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 11 762 398 B1 (TAYLOR JONATHAN [US] ET AL) 19 September 2023 (2023-09-19) | 1-3,5-8, 11-13 | INV. G01S5/00 |
| A | * figures 2,3 * <br> * column 7, line 47 - line 67 * <br> * column 8, line 37 - column 9, line 33 * <br> * column 10, line 50 - line 67 * <br> * column 11, line 18 - line 30 * <br> * column 12, line 46 - column 13, line 3 * | 4,9,10, 14,15 | G01S5/02 <br> G08G5/54 |
| A | LU KUAN-I ET AL: "Device-Free CSI-Based Wireless Localization for High Precision Drone Landing Applications", 2019 IEEE 90TH VEHICULAR TECHNOLOGY CONFERENCE (VTC2019-FALL) IEEE, 22 September 2019 (2019-09-22), pages 1-5, XP033648246, DOI: 10.1109/VTCFALL.2019.8891207 [retrieved on 2019-11-04] * the whole document * | 1-15 | |
| A | US 2018/357910 A1 (HOBBS RONALD [US] ET AL) 13 December 2018 (2018-12-13) * the whole document * | 1-15 | **TECHNICAL FIELDS SEARCHED (IPC)** <br><br> G01S <br> G08G |
| A | CN 110 333 479 A (UNIV NATIONAL DONG HWA) 15 October 2019 (2019-10-15) * figure 1 * * paragraph [0039] * * paragraph [0045] - paragraph [0077] * | 1-15 | |

The present search report has been drawn up for all claims

| Place of search | Date of completion of the search | Examiner |
|---|---|---|
| Munich | 20 March 2026 | Hekmat, Taymoor |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P4C01)

## ANNEX TO THE EUROPEAN SEARCH REPORT
## ON EUROPEAN PATENT APPLICATION NO.

EP 25 21 6298

This annex lists the patent family members relating to the patent documents cited in the above-mentioned European search report.
The members are as contained in the European Patent Office EDP file on
The European Patent Office is in no way liable for these particulars which are merely given for the purpose of information.

20-03-2026

| Patent document cited in search report | | Publication date | Patent family member(s) | | Publication date |
|---|---|---|---|---|---|
| US 11762398 | B1 | 19-09-2023 | NONE | | |
| US 2018357910 | A1 | 13-12-2018 | EP<br>US | 3415427 A1<br>2018357910 A1 | 19-12-2018<br>13-12-2018 |
| CN 110333479 | A | 15-10-2019 | NONE | | |

EPO FORM P0459

For more details about this annex : see Official Journal of the European Patent Office, No. 12/82